# EUROPEAN PATENT APPLICATION

(11) **EP 2 296 397 A1**
(43) Date of publication of application: **16.03.2011**
(21) Application number: 09766550.9
(22) Date of filing: 09.06.2009
(51) Int. Cl.: H04W 24/04, H04J 1/00, H04J 11/00, H04W 56/00, H04W 74/08

(54) **COMMUNICATION SYSTEM, BASE STATION DEVICE AND MOBILE STATION DEVICE**

(30) Priority: 19.06.2008 JP 2008160059
(71) Applicant: Sharp Kabushiki Kaisha, Osaka-shi, Osaka 545-8522 (JP)
(72) Inventor: KATO, Yasuyuki, Osaka 545-8522 (JP); YAMADA, Shohei, Osaka 545-8522 (JP)
(74) Representative: Müller - Hoffmann & Partner
(86) International application number: PCT/JP2009/060515
(87) International publication number: WO 2009/154102

(57) **Abstract**

A base station apparatus detects an uplink radio error and recovers the uplink. In a communication system comprised of a base station apparatus and a mobile station apparatus, when the base station apparatus instructs the mobile station apparatus to execute contention based random access, the base station apparatus and the mobile station apparatus release uplink synchronization, while when the base station apparatus instructs the mobile station apparatus to execute non-contention based random access, the base station apparatus and the mobile station apparatus maintain uplink synchronization.

## Description

### Technical Field

The present invention relates to techniques of radio link connection processing between a mobile station apparatus and base station apparatus in uplink.

### Background Art

In 3GPP (3rd Generation Partnership Project), the W-CDMA system has been standardized as the 3rd-generation cellular mobile communication system, and its service is started sequentially. Further, HSDPA with further increased communication rates has also been standardized, and its service is being started.

Meanwhile, 3GPP is discussing evolution of the 3rd-generation radio access (Evolved Universal Terrestrial Radio Access: hereinafter, referred to as "E-UTRA"). As the downlink of EUTRA, an OFDM (Orthogonal Frequency Division Multiplexing) system is proposed. Further, as the uplink of EUTRA, proposed is a single-carrier communication system of DFT (Discrete Fourier Transform)-spread OFDM system.

The downlink of EUTRA is comprised of downlink pilot channel DPiCH, downlink synchronization channel DSCH, physical downlink shared channel PDSCH, physical downlink control channel PDCCH, and common control physical channel CCPCH.

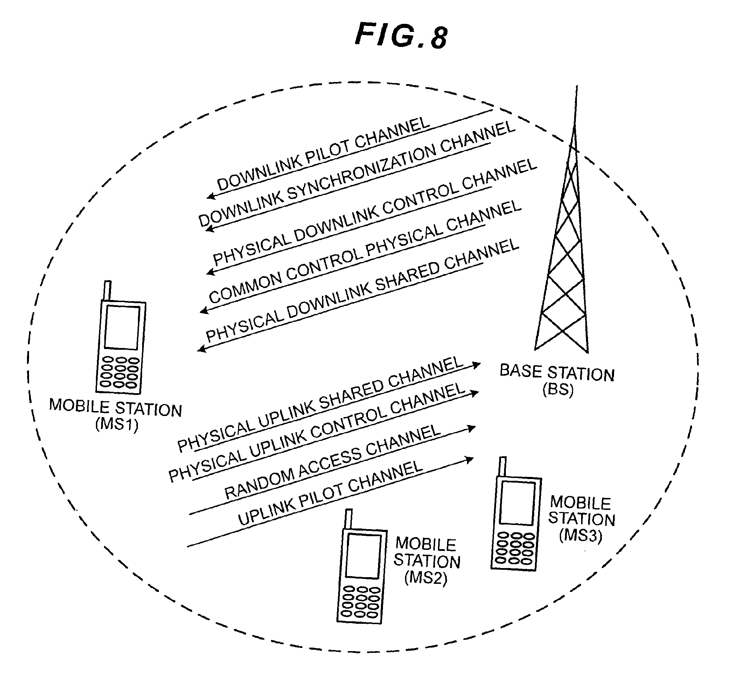

FIG. 8 is a diagram illustrating uplink and downlink channels of EUTRA. As shown in FIG. 8, the uplink of EUTRA is comprised of uplink pilot channel UPiCH, random access channel RACH, physical uplink shared channel PUSCH, and physical uplink control channel PUCCH (Non-patent Documents 1 and 2).

The physical uplink control channel PUCCH is allocated to each mobile station apparatus for a response to data transmitted from the base station apparatus to the mobile station apparatus on the physical downlink shared channel PDSCH, a report of CQI (Channel Quality Indicator) in downlink, and a request for data transmission from the mobile station apparatus.

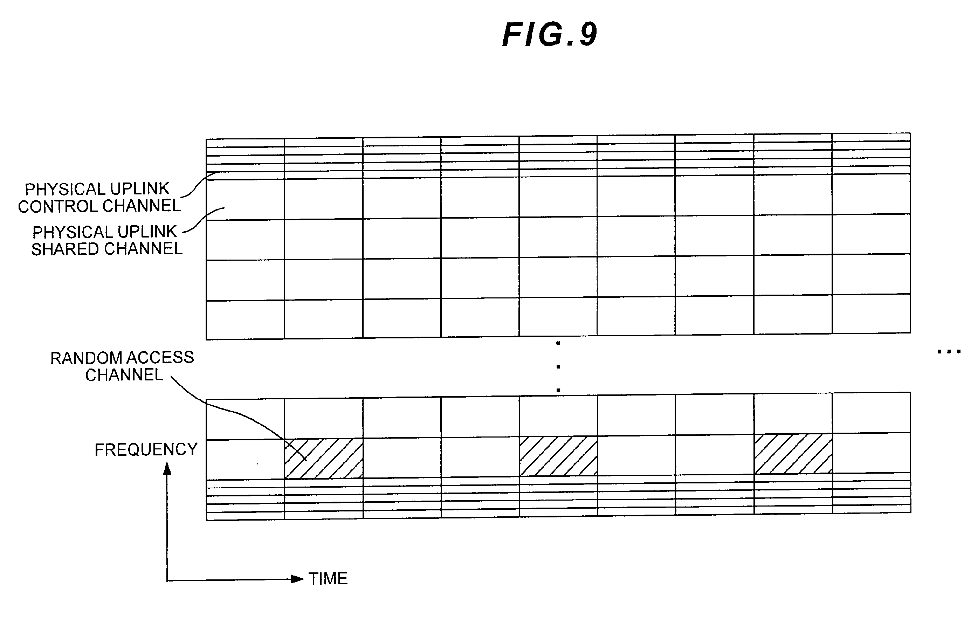

FIG. 9 is a diagram illustrating an uplink channel configuration. The random access channel RACH in uplink of E-UTRA uses a band of 1.25 MHz, and a plurality of random access channels RACHs is prepared to respond to access from a number of mobile station apparatuses. Among intended purposes of the random access channel RACH, the prime purpose is to synchronize a mobile station apparatus that is not synchronized with the base station apparatus in uplink, and it is also considered transmitting the number-of-bit information of a request for scheduling for allocating radio resources and the like to decrease the connection time (Non-patent Document 2).

For the random access channel RACH, there are two access methods, Contention based Random Access and Non-contention based Random Access, and Contention based Random Access is random access having a possibility that a collision occurs between mobile station apparatuses, and is commonly performed random access. Non-contention based Random Access is random access where any collision occurs between mobile station apparatuses, and is performed under the initiative of the base station apparatus in particular occasions such as handover to promptly achieve synchronization between the mobile station apparatus and the base station apparatus. In addition, when the base station apparatus cannot make a mobile station apparatus execute Non-contention based Random Access, there is a case that the base station apparatus makes the mobile station apparatus execute Contention based Random Access.

On the random access channel RACH, only a random access preamble is transmitted to achieve synchronization. The random access preamble includes a signal pattern indicative of information, and by preparing several tens of types of random access preambles, it is possible to represent the information of several bits. Currently, it is assumed that 6-bit information is transmitted, and that 64 types of random access preambles are prepared. In the 6-bit information, it is assumed that five bits are of random ID, and that remaining one bit is assigned information such as downlink path loss/CQI (Non-patent Document 3).

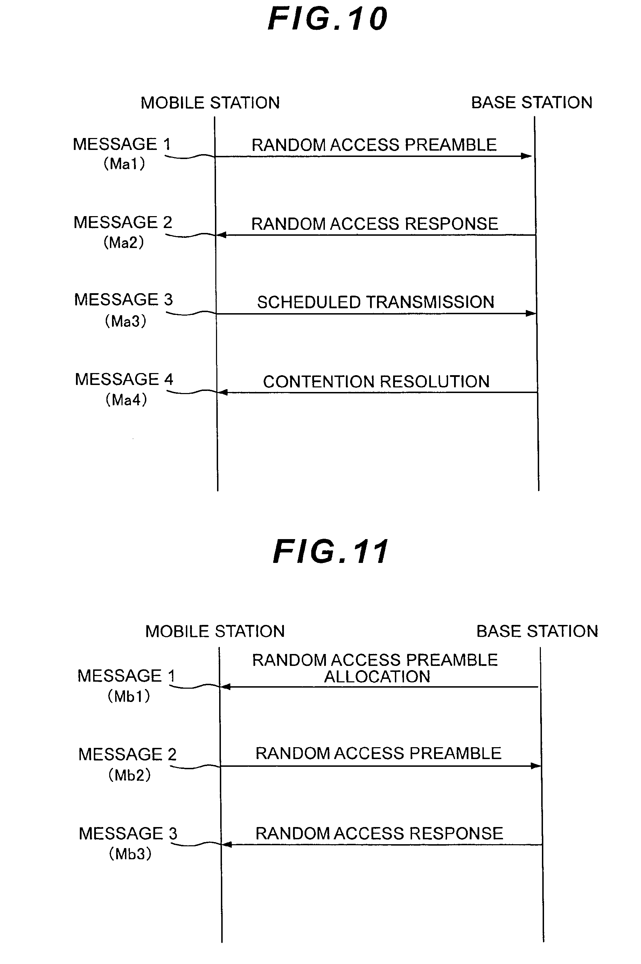

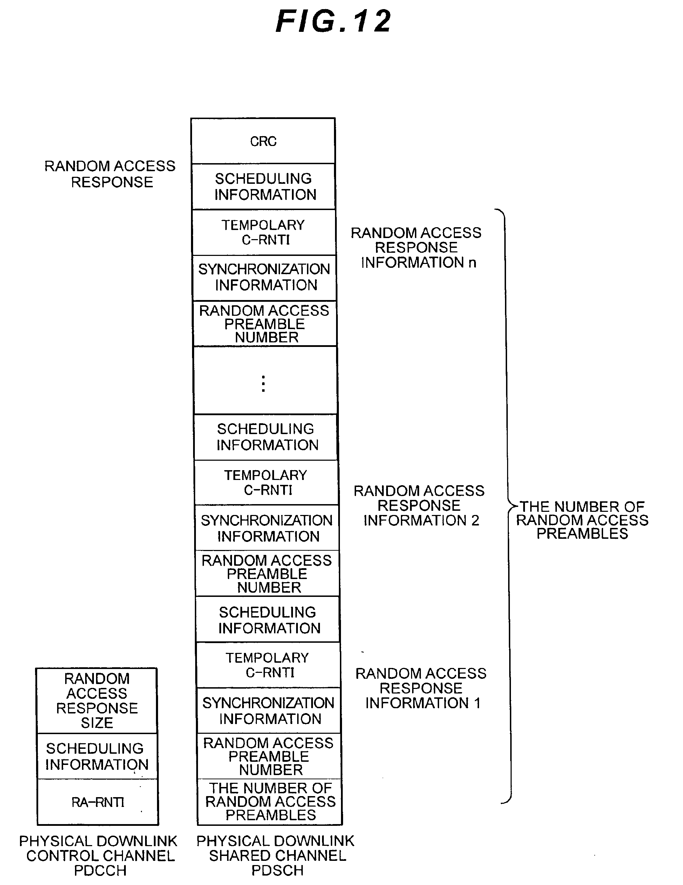

FIG. 10 is a diagram showing an example of a procedure of Contention based Random Access, and FIG. 11 is a diagram showing an example of a procedure of Non-contention based RandomAccess. Further, FIG. 12 is a diagram showing a format example of a random access response. In FIG. 10, a mobile station apparatus selects a random access preamble from the random ID, downlink path loss/CQI information, etc. and transmits the random access preamble on the random access channel RACH (message 1 (Ma1)).

Upon receiving the random access preamble from the mobile station apparatus, the base station apparatus calculates a synchronizing timing deviation amount between the mobile station apparatus and the base station apparatus from the random access preamble, performs scheduling for transmitting an L2/L3 (Layer 2/Layer 3) message, and assigns Temporary C-RNTI (Temporary Cell-Radio Network Temporary Identity). Then, as shown in FIG. 12, the base station apparatus assigns, onto the physical downlink control channel PDCCH, RA-RNTI (Random Access-Radio Network Temporary Identity) indicative of a response to the mobile station apparatus that transmits the random access preamble on the random access channel RACH, and transmits a random access response including, on the physical downlink shared channel PDSCH, synchronization information (Timing Advance Command or Time Alignment Command) of the calculated synchronizing timing deviation, scheduling information, Temporary C-RNTI, and a random access preamble number (or random ID) of the received random access preamble (message 2 (Ma) 2). At this point, the base station apparatus starts a synchronous timer.

Upon confirming that the physical downlink control channel PDCCH has RA-RNTI, the mobile station apparatus checks the contents of the random access response arranged on the physical downlink shared channel PDSCH, extracts the response including the transmitted random access preamble number (or random ID), acquires the synchronization information to correct uplink transmission timing, starts a synchronous timer, and transmits an L2/L3 message including at least C-RNTI (or Temporary C-RNTI) with scheduled radio resources (message 3 (Ma3)). Upon receiving the L2/L3 message from the mobile station apparatus, the base station apparatus transmits a contention resolution to determine whether a collision occurs between mobile station apparatuses to the mobile station apparatus (message 4 (Ma4)), using the C-RNTI (or Temporary C-RNTI) included in the received L2/L3 message (Non-patent Document 3).

In addition, in Contention based Random Access that is performed during uplink synchronization, there is a case that the synchronization information included in a random access response is not used and that synchronization is not corrected.

FIG. 11 is a diagram showing an example of a procedure of Non-contention based Random Access. First, the base station apparatus selects a random access preamble number, and notifies the mobile station apparatus of the random access preamble number via the physical downlink control channel PDCCH or physical downlink shared channel PDSCH (message (Mb1)). The mobile station apparatus generates a random access preamble from the notified random access preamble number, and transmits the random access preamble on the random access channel RACH (message (Mb2)).

Upon receiving the random access preamble from the mobile station apparatus, the base station apparatus calculates a synchronizing timing deviation amount between the mobile station apparatus and the base station apparatus from the random access preamble, assigns, onto the physical downlink control channel PDCCH, RA-RNTI indicative of a response to the mobile station apparatus that transmits the random access preamble on the random access channel RACH, and transmits a random access response including synchronization information of the calculated synchronizing timing deviation (message 3 (Mb) 3). At this point, the base station apparatus starts a synchronous timer. The mobile station apparatus acquires the synchronization information from the received random access response, corrects the uplink transmission timing, and starts a synchronous timer (Non-patent Document 3).

The uplink pilot channel UPiCH has two types, sounding RS (Reference Signal for measurement) and demodulated RS (Reference Signal for demodulation). The sounding RS is used as a reference signal for propagation channel estimation for uplink data scheduling. The sounding RS is used to perform data scheduling, therefore assigned a wider transmission band than a band for data transmission, and is transmitted regularly independently of data transmission. The demodulated RS is used as a reference signal for propagation channel estimation for scheduled data demodulation. The demodulated RS is used for data demodulation, and therefore, is transmitted only in the case of data transmission in the same transmission band as the band of data.

Further, it is considered that the uplink pilot channel UPiCH is used to maintain uplink synchronization between the base station apparatus and the mobile station apparatus connected to the base station apparatus in uplink. The base station apparatus calculates a synchronizing timing deviation amount between the mobile station apparatus and the base station apparatus using the uplink pilot channel UPiCH as in the random access preamble of the random access channel RACH, notifies the mobile station apparatus of the synchronization information (Timing Advance Command or Time Alignment Command) of the calculated synchronizing timing deviation via the physical downlink shared channel PDSCH, and resets (restarts) the synchronous timer. Upon receiving the synchronization information, the mobile station apparatus corrects the uplink transmission timing from the synchronization information, and resets (restarts) the synchronous timer (Non-patent Document 4).

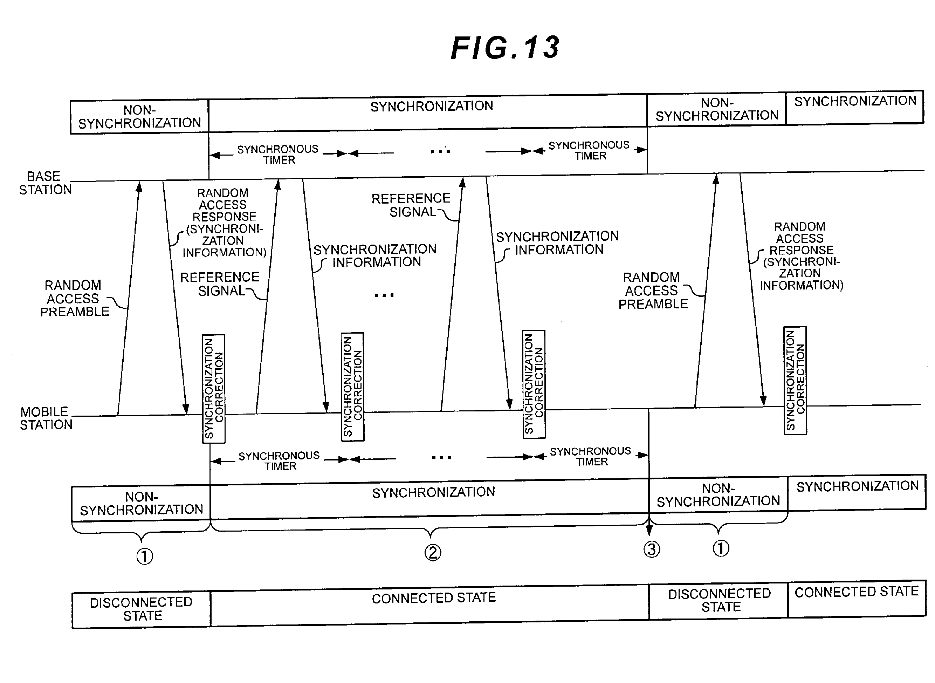

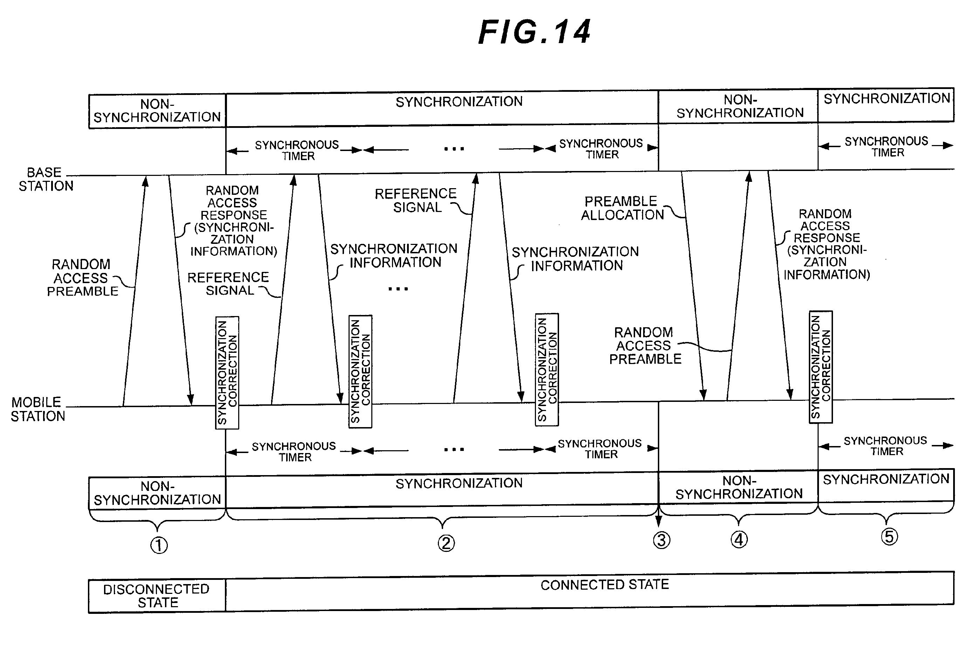

FIGs. 13 and 14 are diagrams showing examples of state transition of each of synchronization establishment, synchronization maintenance and out of synchronization in uplink. First, in FIG. 13, a mobile station apparatus in a disconnected/non-synchronized state with respect to the base station apparatus performs random access of Contention based Random Access (①), acquires uplink synchronization between the base station apparatus and the mobile station apparatus, and becomes a connected/synchronized state. During transmission of the uplink data and control information, the base station apparatus and the mobile station apparatus use the uplink synchronous timers (timing adjustment timers) to manage the synchronized state, and within the synchronous timer, the base station apparatus measures the uplink pilot channel UPiCH (sounding RS) transmitted for each certain period, and uplink pilot channel UPiCH (demodulated RS) transmitted in data transmission. Further, the base station apparatus calculates a synchronizing timing deviation amount, and notifies the mobile station apparatus of the synchronization information (Timing Advance Command or Time Alignment Command), the mobile station apparatus corrects the uplink transmission timing from the synchronization information, and the uplink synchronized state is thereby maintained.

At this point, for a period during which the synchronous timer runs, the synchronized state is maintained. In addition, when the base station apparatus completes transmission of the synchronization information to the mobile station apparatus, the base station apparatus resets (restarts) the synchronous timer (②), and upon receiving the synchronization information, the mobile station apparatus resets (restarts) the synchronous timer. When the connected state between the base station apparatus and the mobile station apparatus is released, the mobile station apparatus is disconnected and out of synchronization (③), and to acquire the connected/synchronized state, performs again random access (①) of Contention based Random Access (FIG. 13).

In another example shown in FIG. 14, a mobile station apparatus in a disconnected/non-synchronized state with respect to the base station apparatus performs random access of Contention based Random Access (①), acquires uplink synchronization between the base station apparatus and the mobile station apparatus, and becomes a connected/synchronized state. During transmission of the uplink data and control information, the base station apparatus and the mobile station apparatus use the uplink synchronous timers to manage the synchronized state, and within the synchronous timer, the base station apparatus measures the uplink pilot channel UPiCH (sounding RS) transmitted for each certain period, and uplink pilot channel UPiCH (demodulated RS) transmitted in data transmission. Further, the base station apparatus notifies the mobile station apparatus of the synchronization information, and calculates a synchronizing timing deviation amount, the mobile station apparatus corrects the uplink transmission timing from the synchronization information, and the uplink synchronized state is thereby maintained. In addition, when the base station apparatus completes transmission of the synchronization information to the mobile station apparatus, the base station apparatus resets (restarts) the synchronous timer (②), and upon receiving the synchronization information, the mobile station apparatus resets (restarts) the synchronous timer (②).

When the synchronous timer expires without the synchronization information being notified before the synchronous timer expires, the state becomes out of synchronization (connected/non-synchronized state) (③). At this point, the physical uplink control channel PUCCH and sounding RS assigned to the mobile station apparatus are released. When data to the mobile station apparatus arrives at the base station apparatus from the network in this non-synchronized state, to acquire uplink synchronization with the mobile station apparatus, the base station apparatus notifies a random access preamble number via the physical downlink control channel PDCCH, and makes the mobile station apparatus execute Non-contention based Random Access (④). Upon receiving assignment of the random access preamble from the base station apparatus, the mobile station apparatus executes Non-contention based Random Access, and then, becomes a synchronized state again (⑤).

In addition, the base station apparatus may set an individual synchronous timer value for each mobile station apparatus via the physical downlink shared channel PDSCH. Alternately, the base station apparatus may broadcast a common synchronous timer value via the common control physical channel CCPCH or system information to set.

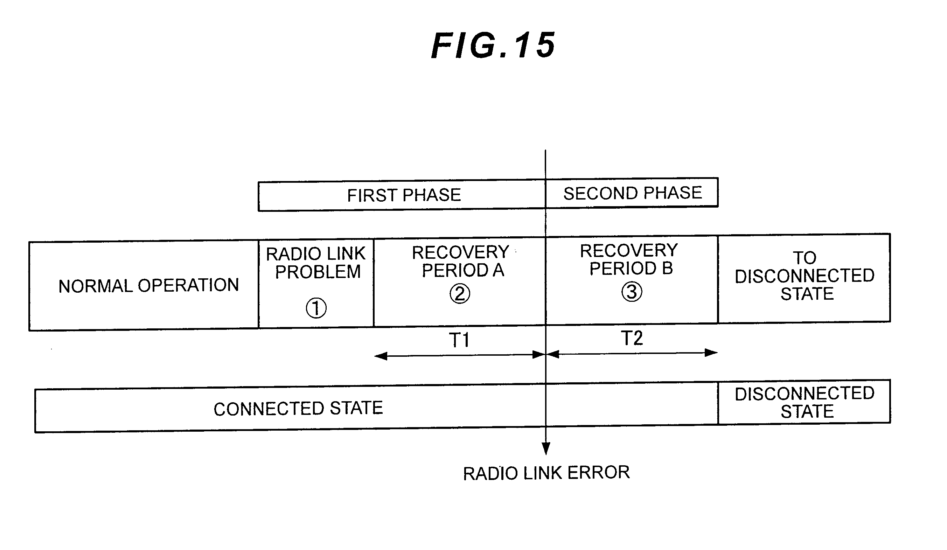

FIG. 15 is a diagram illustrating processing when the mobile station apparatus detects an error (radio link problem) of a radio link. The mobile station apparatus always measures the downlink pilot channel DPiCH, and when the reception quality of the downlink pilot channel DPiCH is less than a certain threshold a, changes from the normal communication state to radio link problem detection (①). Then, the timer T1 is started, and a recovery period A starts. For the recovery period A, the mobile station apparatus checks the quality of the downlink pilot channel DPiCH (②). At this point, when the quality recovers to a threshold b or more, the mobile station apparatus returns to the normal state. When the quality is less than the threshold b, the mobile station apparatus becomes a radio link error, starts a timer T2, and shifts to a recovery period B.

For the recovery period B, the mobile station apparatus performs Contention based Random Access, and performs reconnect ion with the base station apparatus. When the mobile station apparatus can be reconnected to the base station apparatus within the timer T2, the mobile station apparatus shifts to the normal state, while shifting to a disconnected state when failing.

### Prior Art Document

### Non-patent Document

Non-patent Document 1: 3GPP TS (Technical Specification) 36. 211, V8. 20 (2008-03), Technical Specification Group Radio Access Network, Physical Channel and Modulation (Release 8) Non-patent Document 2: 3GPP TS (Technical Specification) 36. 212, V8. 20 (2008-03), Technical Specification Group Radio Access Network, Multiplexing and channel coding (Release 8) Non-patent Document 3: 3GPP TS (Technical Specification) 36. 300, V8. 40 (2008-03), Evolved Universal Terrestrial Radio Access (E-UTRA) and Evolved Universal Terrestrial Radio Access Network (E-UTRAN), Overall description Stage 2 Non-patent Document 4: 3GPP TR (Technical Report) 25. 814, V7.0.0 (2006-06), Physical layer aspects for evolved Universal Terrestrial Radio Access (UTRA)

### Disclosure of Invention

### Problems to be Solved by the Invention

As described above, under present circumstances, the mobile station apparatus is able to perform radio link error detection processing and recovery processing, but the base station apparatus is not able to perform radio link error processing and recovery processing. In other words, when a radio link error is detected, the base station apparatus is not able to make the mobile station apparatus stop transmission in uplink. Further, to recover uplink synchronization of the mobile station apparatus, the base station apparatus needs to request the mobile station apparatus to perform random access.

Meanwhile, the base station apparatus needs to be able to request the mobile station apparatus to perform random access for update of timing information, while maintaining the synchronized state in uplink. In this case, it is necessary to request random access without stopping uplink transmission in the mobile station apparatus.

The present invention was made in view of such circumstances, and it is an object of the invention to provide a communication system, base station apparatus and mobile station apparatus for enabling the base station apparatus to detect an uplink radio error and recover the uplink.

### Means for Solving the Problem

(1) To attain the above-mentioned object, the invention took measures as described below. In other words, a communication system of the invention is a communication system comprised of a base station apparatus and a mobile station apparatus, and is **characterized in that** when the base station apparatus instructs the mobile station apparatus to execute contention based random access, the base station apparatus and the mobile station apparatus release uplink synchronization, and that when the base station apparatus instructs the mobile station apparatus to execute non-contention based random access, the base station apparatus and the mobile station apparatus maintain uplink synchronization.

Thus, when the base station apparatus instructs the mobile station apparatus to execute contention based random access, the base station apparatus and the mobile station apparatus release uplink synchronization. Meanwhile, when the base station apparatus instructs the mobile station apparatus to execute non-contention based random access, the base station apparatus and the mobile station apparatus maintain uplink synchronization. Therefore, when the base station apparatus detects an error of the uplink radio state, the base station apparatus is capable of performing radio link error processing and recovery processing. By the base station apparatus performing the radio link error detection processing, the radio link recovery processing can be performed early, and it is possible to use uplink radio resources effectively.

(2) Further, in the communication system of the invention, it is a feature that uplink radio resources allocated to the mobile station apparatus are released when the base station apparatus and the mobile station apparatus release uplink synchronization.

Thus, when the base station apparatus and the mobile station apparatus release uplink synchronization, it is possible to release uplink radio resources allocated to the mobile station apparatus, and it is thereby possible to use uplink radio resources effectively.

(3) Furthermore, in the communication system of the invention, it is another feature that the base station apparatus measures uplink reception quality, and when the measured reception quality is less than a first threshold, instructs the mobile station apparatus to execute non-contention based random access.

Thus, the base station apparatus measures the uplink reception quality, instructs the mobile station apparatus to execute non-contention based random access when the measured reception quality is less than a first threshold, and is thereby capable of performing the radio link error detection processing. As a result, the radio link recovery processing can be performed early, and it is possible to use uplink radio resources effectively.

(4) Still furthermore, in the communication system of the invention, it is another feature that the base station apparatus instructs the mobile station apparatus to execute contention based random access when all random access preamble numbers for non-contention based random access are used.

Thus, when all the random access preamble numbers for non-contention based random access are used, the base station apparatus instructs the mobile station apparatus to execute contention based random access, and it is thereby possible to give priority to non-contention based random access where any collision does not occur among a plurality of mobile station apparatuses.

(5) Moreover, in the communication system of the invention, it is another feature that the base station apparatus counts a time that has elapsed since the measured reception quality falls below the first threshold, and when the reception quality is not a second threshold or more within a predetermined time, instructs the mobile station apparatus to execute non-contention based random access.

Thus, the base station apparatus counts a time that has elapsed since the measured reception quality falls below the first threshold, and when the reception quality does not become a second threshold or more within a predetermined time, instructs the mobile station apparatus to execute non-contention based random access, and it is thereby possible to perform the radio link error detection processing in the base station apparatus. As a result, the radio link recovery processing can be performed early, and it is possible to use uplink radio resources effectively.

(6) Further, a base station apparatus of the invention is a base station apparatus for notifying a mobile station apparatus of a random access preamble number to make the mobile station apparatus execute random access, and is characterized by having a preamble selecting section that selects a non-contention based random access preamble number, while selecting a random access preamble number for contention based random access when all random access preamble numbers for non-contention based random access are used, an uplink control channel managing section that releases uplink synchronization when the preamble selecting section selects contention based random access, and a transmission section that transmits the selected random access preamble number to the mobile station apparatus.

Thus, since a non-contention based random access preamble number is selected, or a random access preamble number for contention based random access is selected when all the random access preamble numbers for non-contention based random access are used, it is possible to give priority to non-contention based random access where any collision does not occur among a plurality of mobile station apparatuses. Further, when contention based random access is selected, since uplink synchronization is released, it is possible to use uplink radio resources effectively. By this means, the base station apparatus performs the radio link error detection processing, and is capable of performing the radio link error processing and recovery processing. As a result, it is possible to perform the radio link recovery processing early.

(7) Furthermore, the base station apparatus of the invention is characterized by having a reception quality measuring section that measures uplink reception quality, and a timer that starts to count an elapsed time when the uplink reception quality falls below a first threshold, where when the reception quality is not a second threshold or more within a predetermined time, the preamble selecting section selects a non-contention based random access preamble number.

Thus, when the reception quality does not become a second threshold or more within a predetermined time, a non-content ion based randomaccess preamble number is selected, and it is thereby possible to perform the radio link error detection processing in the base station apparatus. As a result, the radio link recovery processing can be performed early, and it is possible to use uplink radio resources effectively.

(8) Still furthermore, in the base station apparatus of the invention, the uplink control channel managing section is characterized by releasing uplink radio resources allocated to the mobile station apparatus when the uplink control channel managing section releases uplink synchronization.

Thus, when the base station apparatus releases uplink synchronization, it is made possible to release uplink radio resources allocated to the mobile station apparatus, and it is thereby possible to effectively use uplink radio resources.

(9) Further, a mobile station apparatus of the invention is a mobile station apparatus for executing random access based on a random access preamble number notified from the base station apparatus, and is characterized by having a control data analyzing section which makes a determination whether the base station apparatus instructs the mobile station apparatus to execute contention based random access or non-contention based random access, based on a received random access preamble number, and as a result of the determination, outputs a non-contention based random access preamble in non-contention based random access, while outputting a signal indicative of releasing uplink synchronization, and further outputting a contention based random access preamble number in contention-based random access, and a random access executing section that executes random access based on the output contention based or non-contention based random access preamble number.

Thus, the mobile station apparatus executes random access based on the random access preamble number received from the base station apparatus, and the base station apparatus is thereby capable of performing the radio link error processing and recovery processing. By the base station apparatus performing the radio link error detection processing, the radio link recovery processing can be performed early, and it is possible to use uplink radio resources effectively.

(10) Furthermore, the mobile station apparatus of the invention is characterized by having a mobile-station side uplink control channel managing section that releases uplink synchronization when the control data analyzing section outputs a signal indicative of releasing uplink synchronization.

Thus, when the control data analyzing section outputs a signal indicative of releasing uplink synchronization, uplink synchronization is released, and the base station apparatus is thereby capable of performing the radio link error processing and recovery processing. By the base station apparatus performing the radio link error detection processing, the radio link recovery processing can be performed early, and it is possible to use uplink radio resources effectively.

(11) Still furthermore, in the mobile station apparatus of the invention, it is a feature that the mobile-station side uplink control channel managing section releases allocated uplink radio resource when the mobile-station side uplink control channel managing section releases uplink synchronization.

Thus, when uplink synchronization is released, allocated uplink radio resources are released, and it is thereby possible to use uplink radio resources effectively. Advantageous Effect of the Invention

Accordingtotheinvention,the basestation apparatus performs the radio link error detection processing, the radio link recovery processing can thereby be performed early, and it is possible to use uplink radio resources effectively. Brief Description of Drawings

FIG. 1 is a diagram illustrating processing when a base station apparatus detects a radio link error;
FIG. 2 is a block diagram illustrating a schematic configuration of the base station apparatus;
FIG. 3 is a block diagram illustrating a schematic configuration of an uplink radio monitoring section 210;
FIG. 4 is a block diagram illustrating a schematic configuration of a mobile station apparatus;
FIG. 5 is a flowchart illustrating the operation of the base station apparatus;
FIG. 6 is a flowchart illustrating the operation of the mobile station apparatus;
FIG. 7 is a format example of physical downlink control channel PDCCH;
FIG. 8 is a diagram illustrating uplink and downlink channels in EUTRA;
FIG. 9 is a diagram illustrating an uplink channel configuration;
FIG. 10 is a diagram showing an example of a procedure of Contention based Random Access;
FIG. 11 is a diagram showing an example of a procedure of Non-contention based Random Access;
FIG. 12 is a diagram showing a format example of random access response;
FIG. 13 is a diagram showing an example of state transition of each of synchronization establishment, synchronization maintenance and out of synchronization in uplink;
FIG. 14 is a diagram showing another example of state transition of each of synchronization establishment, synchronization maintenance and out of synchronization in uplink; and
FIG. 15 is a diagram illustrating processing when the mobile station apparatus detects a radio link error (radio link problem).

### Best Mode for Carrying Out the Invention

An Embodiment according to the invention will be described below with reference to drawings. First, as uplink and downlink channel configurations, configurations as shown in FIG. 8 are assumed. Meanwhile, in a communication system according to this Embodiment, as shown in FIGs. 13 and 14, there are a connected state and disconnected state between a base station apparatus and a mobile station apparatus. Further, in the communication system, each of the base station apparatus and the mobile station apparatus manages an uplink synchronization state (synchronized state and non-synchronized state) using a synchronous timer.

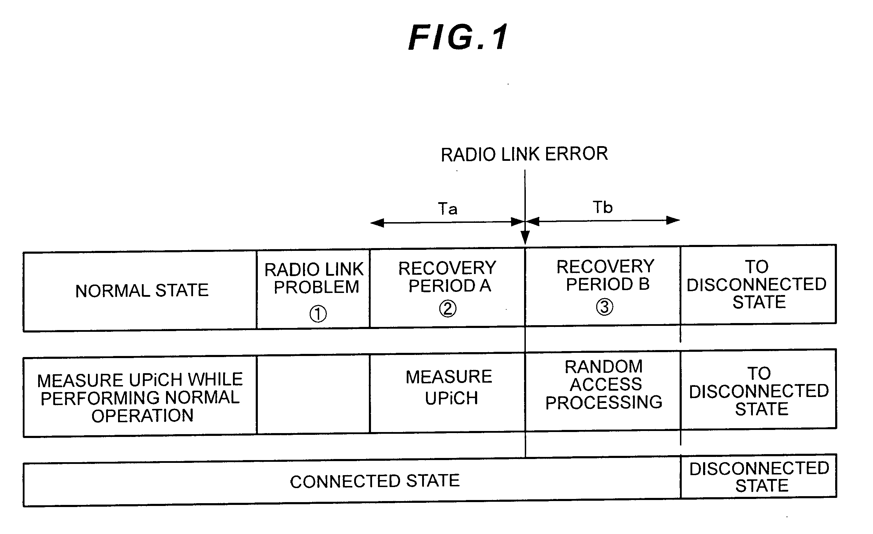

FIG. 1 is a diagram illustrating processing when the base station apparatus detects a radio link error. The base station apparatus measures reception quality of uplink pilot channel UPiCH, and when the reception quality becomes less than a threshold α, shifts to a radio link problem state (shown by ① in FIG. 1). In this radio link problem state, the base station apparatus stops data transmission to the mobile station apparatus on the physical downlink shared channel PDSCH. Then, the base station apparatus starts a timer Ta, and enters a recovery period A. During the recovery period A, the base station apparatus measures the uplink pilot channel UPiCH, and when the reception quality becomes a threshold β or more, returns to a normal state and resumes data transmission to the mobile station apparatus.

Meanwhile, when the state in which the reception quality is less than the threshold β continues, the base station apparatus starts a timer Tb, and to make the mobile station apparatus execute Non-contention based Random Access, allocates a random access preamble to notify the mobile station apparatus of a random access preamble number. In addition, when all the random access preambles for Non-contention based Random Access are used, the base station apparatus notifies of a random access preamble number for Contention based Random Access. When random access does not succeed within a period of the timer Tb, the base station apparatus shifts to a disconnected state. Then, the base station apparatus releases uplink radio resources (physical uplink control channel PUCCH, sounding RS (SRS: reference signal for measurement) and physical uplink shared channel PUSCH). When random access succeeds, the base station apparatus returns to the normal state.

The physical downlink control channel PDCCH is used for notification of the random access preamble number and startup of Non-contention based Random Access or Contention based Random Access. Startup of random access on the physical downlink control channel PDCCH is mainly used in the case of detecting arrival of downlink data to a mobile station apparatus that is out of link synchronization. However, startup of this random access can be used to control uplink synchronization between the base station apparatus and the mobile station apparatus. In other words, to update synchronization, the base station apparatus notifies the mobile station apparatus of a random access preamble number to make the mobile station apparatus execute random access.

In the case of making the mobile station apparatus execute random access, the base station apparatus recognizes that synchronization is lost, but the mobile station apparatus does not recognize the radio link error (loss of synchronization). Therefore, inconsistency occurs in the synchronized/non-synchronized state, and the physical uplink control channel PUCCH, sounding RS and physical uplink shared channel PUSCH allocated to the mobile station apparatus are still maintained.

Therefore, when the base station apparatus makes the mobile station apparatus execute Non-contention based Random Access, since any collision does not occur in Non-contention based Random Access and re-synchronization in uplink does not require time, the base station apparatus maintains uplink synchronization (synchronized state: the state in which the synchronous time is continued to run), and does not release the physical uplink control channel PUCCH, sounding RS and physical uplink shared channel PUSCH allocated to the mobile station apparatus within the Tb timer. When the mobile station apparatus is instructed to execute Non-contention based Random Access from the base station apparatus (is notified of a dedicated preamble), the mobile station apparatus regards as the synchronized state, maintains uplink synchronization between the base station apparatus and the mobile station apparatus, and make the synchronous timer continue to run. During the time the synchronous timer runs, the mobile station apparatus does not release the physical uplink control channel PUCCH, sounding RS and physical uplink shared channel PUSCH allocated to the mobile station apparatus.

By performing in this way, inconsistency in the synchronized/non-synchronized state does not occur between the base station apparatus and the mobile station apparatus, and inconsistency does not occur in allocation of radio resources such as the physical uplink control channel PUCCH. Further, since it is not necessary to perform resetting of radio resources such as the physical uplink control channel PUCCH, wasted radio resources used in setting are not consumed.

Meanwhile, when the base station apparatus makes the mobile station apparatus execute Contention based Random Access, since a collision may occur in Contention based Random Access and the random access procedure has more steps than in Non-contention bases Random Access, re-synchronization in uplink requires time, and a possibility is high that the random access procedure fails.

Therefore, the base station apparatus regards as a loss of uplink synchronization between the base station apparatus and the mobile station apparatus (the non-synchronized state: the state in which the synchronous timer is stopped), and releases uplink radio resources (the physical uplink control channel PUCCH, sounding RS and physical uplink shared channel PUSCH) allocated to the mobile station apparatus. When the mobile station apparatus is instructed to execute Contention based Random Access from the base station apparatus (is instructed to execute random access without being notified of a dedicated preamble), the mobile station apparatus regards as a loss of synchronization between the base station apparatus and the mobile station apparatus, and in the case that the synchronous timer runs, stops the synchronous timer or forces the synchronous timer to expire. With a stop of the synchronous timer, the mobile station apparatus releases allocated physical uplink control channel PUCCH, sounding RS and physical uplink shared channel PUSCH.

By performing in this way, inconsistency in the synchronized/non-synchronized state does not occur between the base station apparatus and the mobile station apparatus, and inconsistency does not occur in allocation of the physical uplink control channel PUCCH. Further, since it is possible to allocate released radio resources such as the physical uplink control channel PUCCH to another mobile station apparatus, radio resources such as the physical uplink control channel PUCCH is not consumed uselessly, and it is possible to use the physical uplink control channel PUCCH efficiently.

When Contention based Random Access is executed and succeeds, the base station apparatus re-allocates the physical uplink control channel PUCCH, sounding RS and physical uplink shared channel PUSCH.

In random access that is designated from the base station apparatus, irrespective of the synchronized state or non-synchronized state, the mobile station apparatus always corrects transmission timing, using the synchronization information (Timing Advance Command or Time Alignment Command) notified in a random access response message.

In addition, Contention based Random Access means the random access procedure described using FIG. 10, and Non-contention based Random Access means the random access procedure described using FIG. 11.

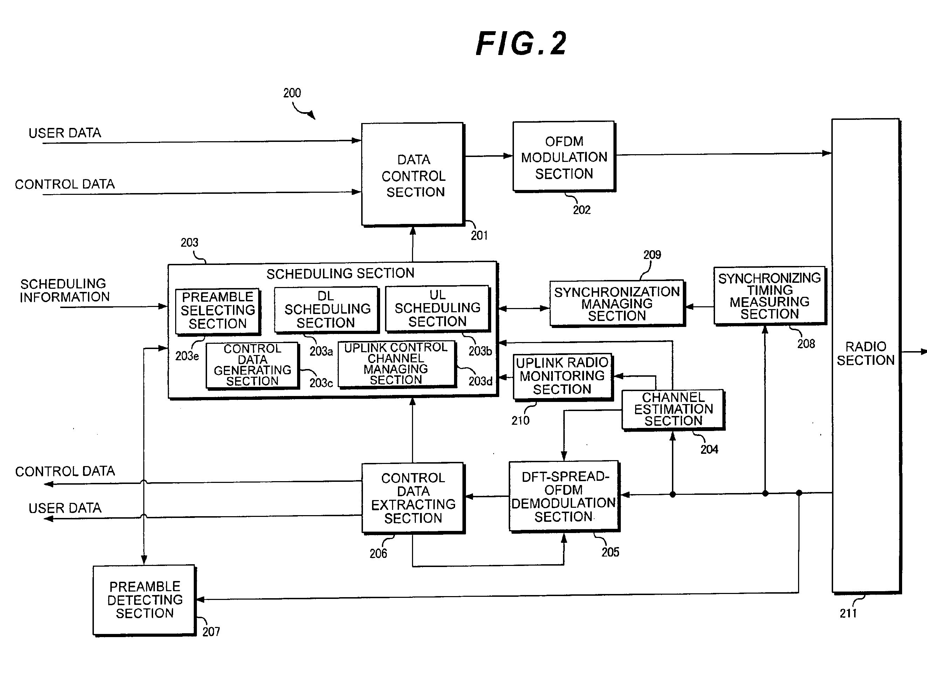

FIG. 2 is a block diagram illustrating a schematic configuration of the base station apparatus. The base station apparatus 200 is comprised of a data control section 201, OFDM modulation section 202, scheduling section 203, channel estimation section 204, DFT-spread-OFDM demodulation section 205, control data extracting section 206, preamble detecting section 207, synchronizing timing measuring section 208, synchronization managing section 209, uplink radio monitoring section 210, and radio section 211. The scheduling section 203 is comprised of a DL scheduling section 203a, UL scheduling section 203b, control data generating section 203c, uplink control channel managing section 203d, and preamble selecting section 203e.

By instructions from the scheduling section 203, among input user data and control data, the data control section 201 maps the control data onto the physical downlink control channel PDCCH, downlink synchronization channel DSCH, downlink pilot channel DPiCH, and common control physical channel CCPCH. Further, the section 201 maps transmission data and control data to each mobile station apparatus onto the physical downlink shared channel PDSCH. The OFDM modulation section 202 performs data modulation, and serial/parallel transform on the input signal, further performs OFDM signal processing such as IFFT (Inverse Fast Fourier Transform), CP (Cyclic Prefix) insertion, and filtering, and generates an OFDM signal. The radio section 211 up-converts the OFDM-modulated data into a signal of a radio frequency to transmit to the mobile station apparatus.

Meanwhile, the radio section 211 receives uplink data from the mobile station apparatus to down-convert into a baseband signal, and outputs reception data to the DFT-spread-OFDM demodulation section 205, channel estimation section 204, preamble detecting section 207 and synchronizing timing measuring section 208.

The channel estimation section 204 estimates radio propagation channel characteristics from demodulate RS (DRS: reference signal for demodulation) on the uplink pilot channel UPiCH, and outputs a radio propagation channel estimation result to the DFT-spread-OFDM demodulation section 205. Further, the channel estimation section 204 outputs a radio propagation channel estimation result to the scheduling section 203 to perform uplink scheduling from sounding RS (SRS: reference signal for measurement) on the uplink pilot channel UPiCH. Furthermore, the section 204 notifies the uplink radio monitoring section 201 of the measured radio propagation channel estimation result.

In addition, as an uplink communication scheme, a single-carrier scheme such as DFT-spread OFDM is assumed, but a multicarrier scheme such as an OFDM system may be used.

The control data extracting section 20 6 checks whether the reception data is correct or erroneous, and notifies the scheduling section 203 of the check result. When the reception data is correct, the control data extracting section 206 divides the reception data into the user data and control data. Among the control data, the control data extracting section 206 outputs downlink CQI information and control data of layer 2 such as ACK/NACK of the downlink data to the scheduling section 203, and other control data of layer 3, etc. and user data to a higher layer. Meanwhile, when the reception data is erroneous, the control data extracting section 206 stores the data so as to combine with retransmission data, and performs combining processing when the retransmission data is received.

The scheduling section 203 is comprised of a DL scheduling section 203a that performs downlink scheduling, an UL scheduling section 203b that performs uplink scheduling, a control data generating section 203c, an uplink control channel managing section 203d and a preamble selecting section 203e that selects a random access preamble number. The DL scheduling section 203a performs scheduling to map the user data and control data on each downlink channel such as the physical downlink shared channel PDSCH and physical downlink control channel PDCCH, from the CQI information notified from the mobile station apparatus, ACK/NACK information of the downlink data, data information of each user notified from the higher layer, and control data generated in the control data generating section 203c.

The UL scheduling section 203b performs scheduling to map the user data on each uplink channel, from the uplink radio propagation channel estimation result from the channel estimation section 204 and a radio resource allocation request from the mobile station apparatus. The control data generating section 203c generates the control data such as ACK/NACK from whether the uplink reception data is correct or erroneous, a random access response message from a preamble detection result from the preamble detecting section 207, a synchronization information (Timing Advance Command or Time Alignment Command) message from a synchronizing timing deviation amount from the synchronization managing section 209, and a random access preamble allocation message.

The uplink control channel managing section 203d manages the physical uplink control channel PUCCH, and allocates resources of the physical uplink control channel PUCCH, which is used to regularly transmit the CQI and to transmit ACK/NACK of downlink user data and control data, to the mobile station apparatus connected to the base station apparatus. When the mobile station apparatus becomes a disconnected state or a non-synchronized state in a connected state, the section 203d releases radio resources of the physical uplink control channel PUCCH of the mobile station apparatus. Further, the section 203d similarly performs management of allocation, release and the like of resources of sounding RS that the mobile station apparatus regularly transmits for scheduling.

The preamble selecting section 203e selects a random access preamble number to make the mobile station apparatus execute Non-contention based Random Access, and notifies the control data generating section 203c of the selected random access preamble number. In addition, when all the random access preambles for Non-contention based Random Access are used, the section 203e selects a preamble number from Contention based Random Access.

Meanwhile, when a random access response message is transmitted to the mobile station apparatus, in the case of receiving ACK of the synchronization information message or making the mobile station apparatus execute random access, the scheduling section 203 instructs the synchronization managing section 209 to start, stop, or reset the synchronous timer.

The preamble detecting section 207 detects a random access preamble, calculates a synchronizing timing deviation amount, and reports the random access preamble number and the synchronizing timing deviation amount to the scheduling section 203. The synchronizing timing measuring section 208 calculates a synchronizing timing deviation amount from the sounding RS and demodulation RS (DRS: reference signal for demodulation), and reports the synchronizing timing deviation amount to the synchronization managing section 209.

The synchronization managing section 209 manages the synchronized state and non-synchronized state, and determines whether or not to need to notify the mobile station apparatus of the synchronization information from the synchronizing timing deviation amount. As a result of this determination, when it is necessary to notify the mobile station apparatus of the synchronization information, the section 209 outputs the synchronizing timing deviation amount to the scheduling section. Further, from instructions from the scheduling section 203, the section 209 starts, stops or resets the synchronous timer. Herein, it is assumed that the case where the synchronous timer works is the synchronized state, and that the case where the synchronous timer is stopped is the non-synchronized state. The uplink radio monitoring section 210 monitors the uplink radio state using the radio propagation channel estimation result from the channel estimation section 204.

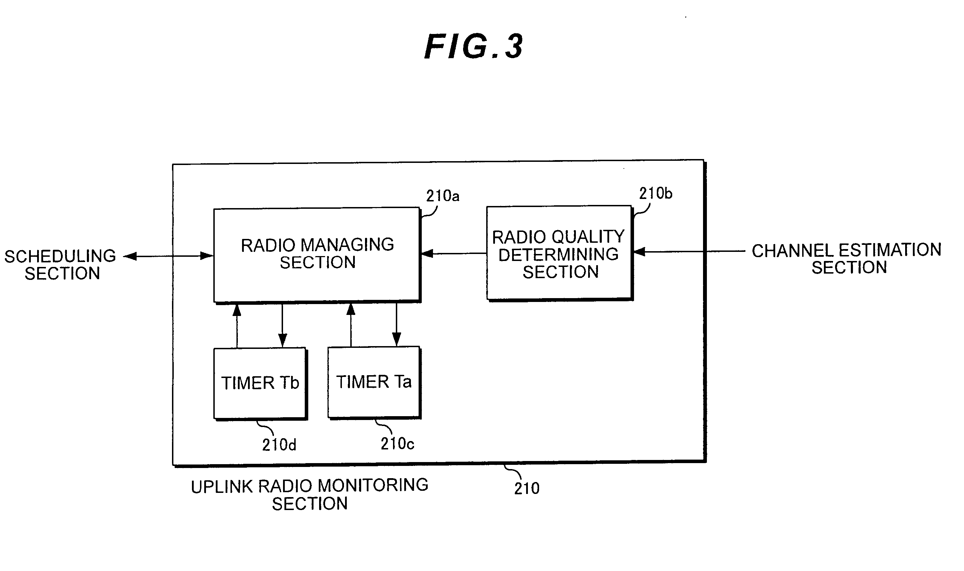

FIG. 3 is a block diagram illustrating a schematic configuration of the uplink radio monitoring section 210. The uplink radio monitoring section 210 is comprised of a radio managing section 210a, radio quality determining section 210b, timer Ta 210c, and timer Tb 210d. The radio propagation channel estimation result from the channel estimation section 204 is input to the radio quality determining section 210b. The radio quality determining section 210b compares the radio propagation channel estimation result with the quality threshold α, and notifies the radio managing section 210a of the comparison result.

Corresponding to the comparison result from the radio quality determining section 210b, the radio managing section 210a performs processing. In other words, when the radio propagation channel estimation result is the normal state and the quality threshold α or more, the section 210a does not perform any processing. Meanwhile, when the radio propagation channel estimation result is less than the quality threshold α, the section 210a manages the state of FIG. 1, starts and stops the timer Ta 210c and timer Tb 210d. Further, the section 210a instructs the scheduling section 203 to execute Random Access. The timer Ta 210c and timer Tb 210d are started, stopped or reset from instructions from the radio managing section 210a.

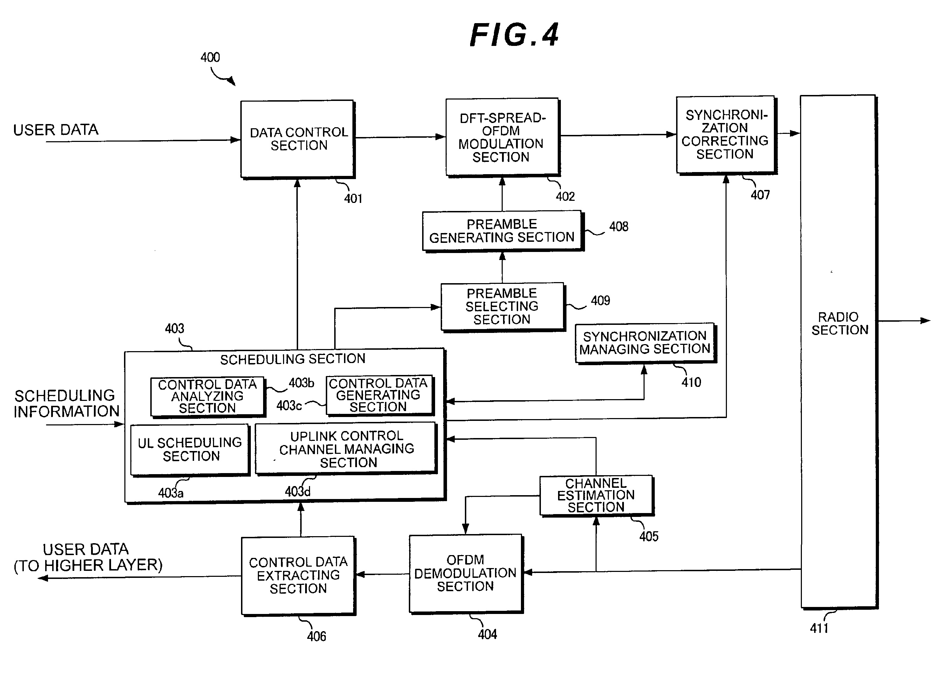

FIG. 4 is a block diagram illustrating a schematic configuration of the mobile station apparatus. The mobile station apparatus 400 is comprised of a data control section 401, DFT-spread-OFDM modulation section 402, scheduling section 403, OFDM demodulation section 404, channel estimation section 405, control data extracting section 406, synchronization correcting section 407, preamble generating section 408, preamble selecting section 409, synchronization managing section 410, and radio section 411. The scheduling section 403 is comprised of an UL scheduling section 403a, control data analyzing section 403b, control data generating section 403c, and uplink control channel managing section 403d.

The user data and control data is input to the data control section 401, and by instructions from the scheduling section 403, is arranged to be transmitted on the uplink scheduling channel. Further, the sounding RS (SRS) and demodulated RS (DRS) are arranged on the uplink pilot channel UPiCH. The DFT-S-OFDM modulation section 402 performs data modulation, further performs DFT-spread-OFDM signal processing such as DFT, subcarrier mapping, IFFT, CP (Cyclic Prefix) insertion and filtering, and generates a DFT-spread-OFDM signal. In addition, as an uplink communication scheme, a single-carrier scheme such as DFT-spread OFDM is assumed, but a multicarrier scheme such as an OFDM system may be used.

The synchronization correcting section 407 corrects the transmission timing from the synchronizing timing deviation amount input from the control data extracting section 406, and outputs data set to coincide with the transmission timing to the radio section 411. The radio section 411 up-converts the modulated data into a signal of a radio frequency beforehand determined in the system to transmit to the base station apparatus. Meanwhile, the radio section 411 receives downlink data from the base station apparatus to down-convert into a baseband signal, and outputs reception data to the OFDM demodulation section 404.

The channel estimation section 405 estimates radio propagation channel characteristics from the downlink pilot channel DPiCH, and outputs an estimation result to the OFDM demodulation section 404. Further, to notify the base station apparatus of the radio propagation channel estimation result, the section 405 converts the result into CQI information, and outputs the CQI information to the scheduling section 403. The OFDM demodulation section 404 demodulates the reception data from the radio propagation channel estimation result of the channel estimation section 405. The control data extracting section 406 divides the reception data into user data and control data. The control data extracting section 406 outputs allocation information of the random access preamble number, uplink synchronization information, scheduling information, random access response message and other layer 2 control data to the scheduling section 403, and further outputs the user data to the higher layer.

The scheduling section 403 is comprised of an UL scheduling section 403a, control data analyzing section 403b, control data generating section 403c and uplink control channel managing section 403d. The control data analyzing section 403b analyzes control information from the control data extracting section 406, outputs the scheduling information to the UL scheduling section 403a, and further outputs the random access response message and the synchronizing timing deviation amount included in the synchronization information (Timing Advance Command or Time Alignment Command) to the synchronization correcting section 407. Further, the section 403b instructs the control data generating section to send back ACK.

Further, upon receiving a random access preamble number, the control data analyzing section 403b determines whether the random access preamble number is a random access preamble number of the Non-contention based Random Access procedure or a random access preamble number of the Contention based Random Access procedure. As a result of the determination, in the case of Non-contention based Random Access, the section 403b notifies the preamble selecting section 409 of the random access preamble number to execute random access. Meanwhile, in the case of Contention based Random Access, the section 403b determines that synchronization is lost, instructs the synchronization managing section 410 to stop the synchronous timer, instructs the UL scheduling section 403a not to transmit data of the control data except random access and the user data, instructs the uplink control channel managing section 403d to release the allocated physical uplink control channel PUCCH, and further instructs the preamble selecting section 409 to execute random access.

The control data generating section 403c generates ACK/NACK and other control data to output to the data control section 401. Further, the scheduling section 403 instructs the preamble section 409 to perform random access, from instructions from the higher layer, and report of a loss of synchronization from the synchronization managing section 410.

Using instructions from the scheduling section 403, the preamble selecting section 409 randomly selects a random access preamble number used in random access, and outputs the selected random access preamble number to the preamble generating section 408. When the random access preamble number is designated from the scheduling section 403, the section 409 outputs the designated random access preamble number to the preamble generating section 408. The preamble generating section 408 generates a random access preamble using the random access preamble number selected by the preamble selecting section 409, and outputs the preamble to the DFT-spread-OFDM modulation section 402.

The synchronization managing section 410 manages uplink synchronization, sets a timer value when a synchronization timer value is input from the scheduling section 403, and starts, stops or resets the synchronous timer by instructions from the scheduling section 403. Further, when the synchronous timer expires, the section 410 notifies the scheduling section of out of synchronization. Inaddition, it is assumed that the case where the synchronous timer works is the synchronized state, and that the case where the synchronous timer is stopped is the non-synchronized state.

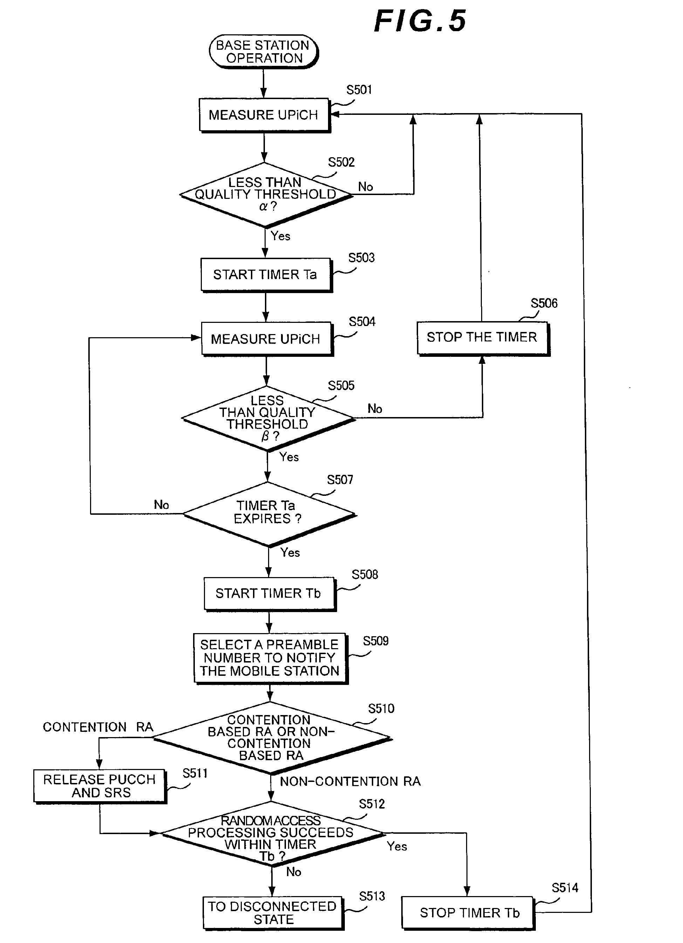

FIG. 5 is a flowchart illustrating the operation of the base station apparatus. First, the base station apparatus measures quality of the uplink pilot channel UPiCH (SRS and DRS) (step S501). Next, the base station apparatus determines whether the reception quality of the measurement result is less than the quality threshold α (step S502), and when the quality is not less than the quality threshold α, repeats measurement in step S501 while being in the normal state. Meanwhile, when the reception quality of the measurement result is less than the quality threshold α in step S502, the base station apparatus stops data transmission on the physical downlink shared channel PDSCH to the mobile station apparatus, and starts or resets the timer Ta (step S503).

The base station apparatus measures the reception quality during the timer Ta (step S504), and determines whether the reception quality is less than the quality threshold β (step S505). When the reception quality is not less than the quality threshold β in step S505, the base station apparatus stops the timer Ta (step S506), returns to the normal state, and resumes data transmission on the physical downlink shared channel PDSCH to the mobile station apparatus. Meanwhile, when the reception quality is less than the quality threshold β in step S505, the base station apparatus determines whether the timer Ta expires (step S507). When the timer Ta does not expire in step S507, the base station apparatus moves to step S504, while starting the timer Tb when the timer Ta expires (step S508).

The base station apparatus selects a random access preamble number used in Non-contention based Random Access, and notifies the mobile station apparatus of the random access preamble number via the physical downlink control channel PDCCH (step S509). In addition, when there is no random access preamble number used in Non-contention based Random Access, the base station apparatus selects a random access preamble of Contention based Random Access, and notifies the mobile station apparatus of the random access preamble number via the physical downlink control channel PDCCH.

Next, the base station apparatus determines whether random access to execute is Contention based Random Access or Non-contention based Random Access (step S510). When random access to execute is Contention based Random Access in step S510 and the physical uplink control channel PUCCH and sounding RS are allocated to the mobile station apparatus, the base station apparatus stops the synchronous timer, shifts to the non-synchronized state, releases uplink radio resources of the physical uplink control channel PUCCH and sounding RS (step S511), and moves to step S512. Meanwhile, when random access to execute is Non-contention based Random Access in step S510, the base station apparatus moves to step S512.

The base station apparatus determines whether random access succeeds within the timer Tb in step S512 (step S512), and when random access does not succeed within the timer Tb, shifts to the disconnected state (step S513) to disconnect connection to the mobile station apparatus. Meanwhile, when random access succeeds within the timer Tb in step S512, the base station apparatus stops the timer Tb (step S514), and returns to the normal state. At this point, the physical uplink control channel PUCCH and sounding RS may be re-allocated to a mobile station apparatus to which the physical uplink control channel PUCCH and sounding RS are not allocated.

In addition, the base station apparatus resets and restarts the synchronous timer in the case of transmitting the random access response, while shifting from the non-synchronized state to the synchronized state in the case of Contention based Random Access.

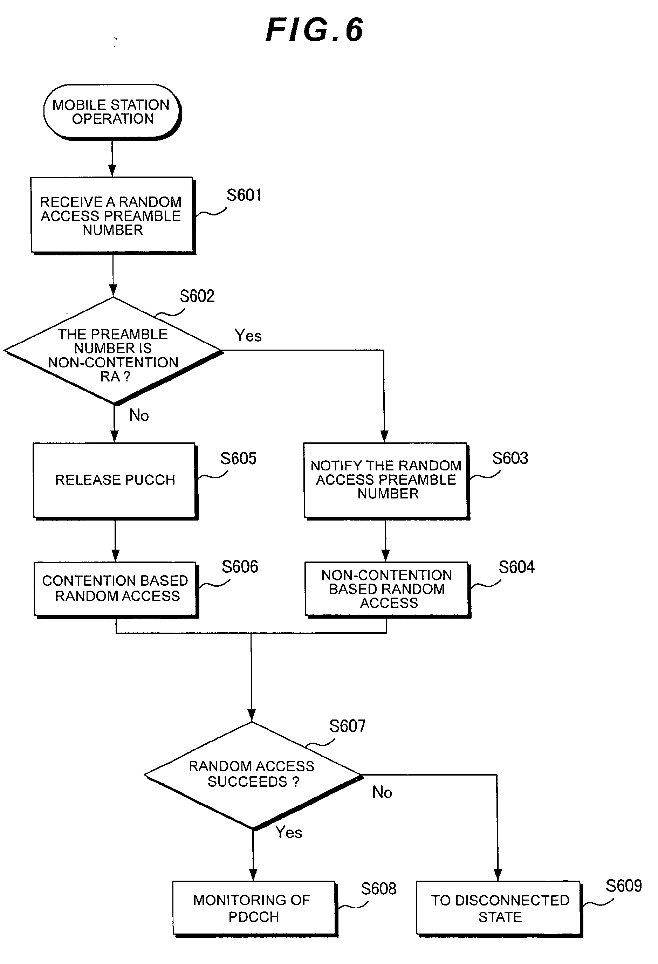

FIG. 6 is a flowchart illustrating the operation of the mobile station apparatus. First, when the mobile station apparatus receives a random access preamble number from the base station apparatus (step S601), the control data analyzing section 403b determines whether the random access preamble number is of Contention based Random Access or Non-contention based Random Access (step S602). Alternately, when the mobile station apparatus receives a random access instruction from the base station apparatus, the control data analyzing section 403b determines whether the instruction is of Contention based Random Access or Non-contention based Random Access.

When the random access preamble number is of Non-contention based Random Access in step S602 (when a dedicated preamble is notified), the section 403b notifies the preamble selecting section 409 of the random access preamble number (step S603), and random access is executed (step S604). Meanwhile, when the random access preamble number is of Contention based Random Access in step S602 (random access is indicated without notification of a dedicated preamble), the mobile station apparatus regards as a loss of uplink synchronization (non-synchronization) between the base station apparatus and the mobile station apparatus, and when the synchronous timer runs, stops the synchronous timer or forces the synchronous timer to expire, and the uplink control channel managing section releases radio resources of the physical uplink control channel PUCCH and sounding RS allocated to the mobile station apparatus (step S605).

Then, the mobile station apparatus executes Contention based Random Access using a random access preamble selected from a preamble group for Contention based Random Access (step S606). Next, the mobile station apparatus determines whether the random access succeeds (step S607), and when the random access succeeds, continues communications while monitoring the physical downlink control channel PDCCH (step S608). Meanwhile, when the random access fails in step S607, the mobile station apparatus re-executes Contention based Random Access the certain number of times, and in the case of not succeeding, shifts to the disconnected state to disconnect connection with the base station apparatus (step S609).

Inaddition, whenrandomaccessisexecuted, the mobile station apparatus always corrects the transmission timing using the synchronizing timing deviation amount of the synchronization information notified on the random access response message. In other words, when the base station apparatus notifies of a dedicated preamble, the mobile station apparatus corrects the transmission timing using the synchronizing timing deviation amount of the synchronization information notified on the random access response message, and resets the running synchronous timer to restart. When the base station apparatus indicates random access without notifying of a dedicated preamble, the mobile station apparatus corrects the transmission timing using the synchronizing timing deviation amount of the synchronization information notified on the random access response message, shifts to the synchronized state, and starts the synchronous timer.

In the aforementioned example, the example is shown in the case of detecting arrival of downlink data to a mobile station apparatus losing uplink synchronization, and startup of random access by the base station apparatus as described above can be used in control (update of synchronization) of uplink synchronization between the base station apparatus and the mobile station apparatus.

As described above, the base station apparatus performs the radio link error detection processing, the radio link recovery processing can thereby by performed early, and it is possible to use uplink radio resources effectively. Further, in the above-mentioned example, the base station apparatus performs the recovery processing for the detected radio link error during the recovery period B, but the base station apparatus does not have any particular problem in performing the processing during the recovery period A. In this case, the base station apparatus waits for random access from the mobile station apparatus during the recovery period B. It is shown that synchronization is maintained or released depending on the type of random access (Contention based Random Access, Non-contention based random Access) selected by the base station apparatus, and the above-mentioned content can be performed by the base station apparatus notifying the mobile station apparatus of information (that may be information indicating synchronization maintenance/synchronization release of 1 bit) indicating synchronization maintenance/release together with a random access preamble number, or of information indicating a start (reset)/stop of the synchronous timer.

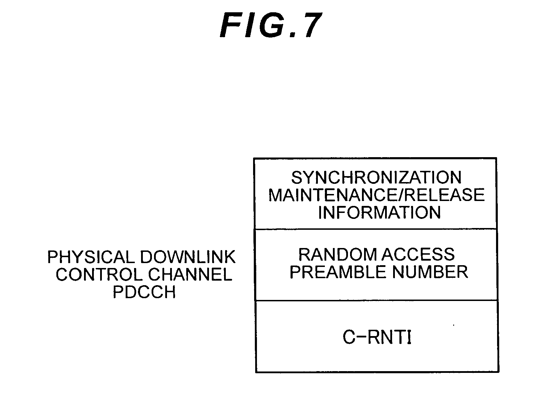

FIG. 7 is a diagram illustrating a format of the physical downlink control channel PDCCH. For example, using the format as shown in FIG. 7, the base station apparatus includes the information indicating synchronization maintenance/release or information indicating a start (reset) /stop of the synchronous timer on the physical downlink control channel PDCCH for notifying of a random access preamble number, and notifies the mobile station apparatus of the information.

In this case, in FIG. 4, when a random access preamble number is received from the base station apparatus, the control data analyzing section 403b of the mobile station apparatus determines whether to maintain synchronization or release synchronization, from the information indicating synchronization maintenance/release notified together with the random access preamble number. Further, the control data analyzing section 403b determines whether to start (reset) or stop the synchronous timer from the information indicating a start (reset)/stop of the synchronous timer notified together with the random access preamble number. When the control data analyzing section 403b determines that synchronization is released or the synchronous timer is stopped, the mobile station apparatus regards as a loss of uplink synchronization (non-synchronization) between the base station apparatus and the mobile station apparatus. Then, when the synchronous timer runs, the synchronization managing section 410 stops the synchronous timer or forces the synchronous timer to expire, and the uplink control channel managing section 403d releases radio resources of the physical uplink control channel PUCCH, sounding RS, etc. allocated to the mobile station apparatus.

In this case, it is made possible to easily perform management of synchronization between the base station apparatus and the mobile station apparatus by the base station apparatus. Further, the base station apparatus may transmit only the information indicating synchronization maintenance/release alone via the physical downlink control channel. In this case, since it is possible to instruct a mobile station apparatus that does not use many uplink radio resources to release synchronization, the base station apparatus is capable of performing not only management of synchronization between the base station apparatus and the mobile station apparatus with ease, but also management of uplink radio resources with ease.

Further, in the above-mentioned example, when all the random accesspreamblesforNon-contention based Random Access are used, the base station apparatus selects Contention based Random Access. Alternately, the base station apparatus may select Non-contention based Random Access to maintain synchronization (update the synchronous timer), detect a radio link problem state, and select Contention based Random Access to make the mobile station apparatus perform random access during a recovery period. Also in this case, it is made possible to easily perform management of synchronization between the base station apparatus and the mobile station apparatus by the base station apparatus.

### Description of Symbols

- 200: Base station apparatus
- 201: Data control section
- 202: OFDM modulation section
- 203: Scheduling section
- 203a: DL scheduling section
- 203b: UL scheduling section
- 203c: Control data generating section
- 203d: Uplink control channel managing section
- 203e: Preamble selecting section
- 204: Channel estimation section
- 205: DFT-spread-OFDM demodulation section
- 206: Control data extracting section
- 207: Preamble detecting section
- 208: Synchronizing timing measuring section
- 209: Synchronization managing section
- 210: Uplink radio monitoring section
- 210a: Radio managing section
- 210b: Radio quality determining section
- 211: Radio section
- 400: Mobile station apparatus
- 401: Data control section
- 402: DFT-spread-OFDM modulation section
- 403: Scheduling section
- 403a: UL scheduling section
- 403b: Control data analyzing section
- 403c: Control data generating section
- 403d: Uplink control channel managing section
- 404: OFDM demodulation section
- 405: Channel estimation section
- 406: Control data extracting section
- 407: Synchronization correcting section
- 408: Preamble generating section
- 409: Preamble selecting section
- 410: Synchronization managing section
- 411: Radio section

## Claims

1. A communication system comprised of a base station apparatus (200) and a mobile station apparatus (400),
wherein when the base station apparatus (200) instructs the mobile station apparatus (400) to execute contention based random access, the base station apparatus (200) and the mobile station apparatus (400) releaseuplinksynchronization, while when the base station apparatus (200) instructs the mobile station apparatus (400) to execute non-contention based random access, the base station apparatus (200) and the mobile station apparatus (400) maintain uplink synchronization.

2. The communication system according to claim 1, wherein when the base station apparatus (200) and the mobile station apparatus (400) release uplink synchronization, uplink radio resources allocated to the mobile station apparatus (400) are released.

3. The communication system according to claim 1 or 2, wherein the base station apparatus (200) measures uplink reception quality, and when the measured reception quality is less than a first threshold, instructs the mobile station apparatus (400) to execute non-contention based random access.

4. The communication system according to claim 3, wherein when all random access preamble numbers for non-contention based random access are used, the base station apparatus (200) instructs the mobile station apparatus (400) to execute contention based random access.

5. The communication system according to claim 3 or 4, wherein the base station apparatus (200) counts a time that has elapsed since the measured reception quality falls below the first threshold, and when the reception quality is not a second threshold or more within a predetermined time, instructs the mobile station apparatus (400) to execute non-contention based random access.

6. A base station apparatus (200) for notifying a mobile station apparatus (400) of a random access preamble number to make the mobile station apparatus (400) execute random access, comprising:
a preamble selecting section (203e) that selects a non-contention based random access preamble number, while selecting a random access preamble number for contention based random access when all random access preamble numbers for non-contention based random access are used;
an uplink control channel managing section (203d) that releases uplink synchronization when the preamble selecting section (203e) selects contention based random access; and
a transmission section (202,211) that transmits the selected random access preamble number to the mobile station apparatus (400).

7. The base station apparatus (200) according to claim 6, further comprising:
a reception quality measuring section (204) that measures uplink reception quality; and
a timer (210c, 210d) that starts to count an elapsed time when the uplink reception quality falls below a first threshold,
wherein when the reception quality is not a second threshold or more within a predetermined time, the preamble selecting section (203e) selects a non-contention based random access preamble number.

8. The base station apparatus (200) according to claim 6 or 7, wherein when the uplink control channel managing section releases uplink synchronization, the uplink control channel managing section (203d) releases uplink radio resources allocated to the mobile station apparatus (400).

9. A mobile station apparatus (400) for executing random access based on a random access preamble number notified from the base station apparatus (200), comprising:
a control data analyzing section (403b) which makes a determination whether the base station apparatus (200) instructs the mobile station apparatus (400) to execute contention based random access or non-contention based random access, based on a received random access preamble number, and as a result of the determination, outputs a non-contention based random access preamble in non-contention based random access, while outputting a signal indicative of releasing uplink synchronization, and further outputting a contention based random access preamble number in contention-based random access; and
a random access executing section (402,407,408,409,411) that executes random access based on the output contention based or non-contention based random access preamble number.

10. The mobile station apparatus (400) according to claim 9, further comprising:
a mobile-station side uplink control channel managing section (403d) that releases uplink synchronization when the control data analyzing section (403b) outputs the signal indicative of releasing uplink synchronization.

11. The mobile station apparatus (400) according to claim 10, wherein when the mobile-station side uplink control channel managing section (403d) releases uplink synchronization, the mobile-station side uplink control channel managing section (403d) releases allocated uplink radio resource.
